# EUROPÄISCHE PATENTSCHRIFT

(11) **EP 3 083 370 B1**
(45) Veröffentlichungstag und Bekanntmachung des Hinweises auf die Patenterteilung: **11.12.2019**
(21) Anmeldenummer: 14789562.7
(22) Anmeldetag: 27.10.2014
(51) Int. Cl.: B60K 35/00, B60Q 9/00, B62D 15/02, B60W 50/14

(54) **VORRICHTUNG UND VERFAHREN ZUM SIGNALISIEREN EINES ABSTANDSSIGNALS UNTER ERHÖHTER EIGENVERANTWORTUNG**
DEVICE AND METHOD FOR PROVIDING A DISTANCE SIGNAL REQUIRING INCREASED OPERATOR RESPONSIBILITY
DISPOSITIF ET PROCÉDÉ DE SIGNALISATION D'UN SIGNAL DE DISTANCE À RESPONSABILITÉ INDIVIDUELLE ACCRUE

(30) Priorität: 18.12.2013 DE 102013226343
(43) Veröffentlichungstag der Anmeldung: 26.10.2016
(73) Patentinhaber: Robert Bosch GmbH, 70442 Stuttgart (DE)
(72) Erfinder: HOENES, Frank, 71254 Ditzingen (DE); KARL, Matthias, 76275 Ettlingen (DE)
(86) Internationale Anmeldenummer: PCT/EP2014/072981
(87) Internationale Veröffentlichungsnummer: WO 2015/090692

(56) Entgegenhaltungen:
- EP-A1- 1 403 138
- EP-A1- 2 130 736
- DE-A1- 10 015 897
- US-A1- 2007 126 564

## Beschreibung

### Stand der Technik

Die vorliegende Erfindung betrifft eine Vorrichtung sowie ein Verfahren zum Signalisieren eines Abstandssignals, wie sie beispielsweise in Kraftfahrzeugen zum Zwecke der Einparkassistenz verwendet werden. Insbesondere betrifft die vorliegende Erfindung eine Vergrößerung des Anwendungsbereiches in Richtung besonders geringer Objektabstände.

Parkassistenzsysteme für Personenkraftfahrzeuge basieren häufig auf Ultraschallsignalen. Messungen mittels Kamera sind erst in der Entwicklung begriffen, während Messungen mittels elektromagnetischer Wellen, wie z.B. Radar bzw. mittels Messung der Kapazitätsänderung Alternativen für die ultraschallbasierte Umfelddetektion darstellen. Insbesondere bei der akustischen Umfelddetektion wird mittels Laufzeitmessung von Schallpulsen der Abstand zu reflektierenden Umgebungsobjekten erfasst und mittels Mensch-Maschine-Schnittstelle (englisch: "Human-Machine-Interface", HMI) dem Fahrer dargestellt. Rein akustisch warnende Systeme verwenden heute einen Signalton mit einer ersten Tonfrequenz für das vordere und einen Signalton einer zweiten Tonfrequenz für das am Fahrzeugheck angebrachte Sensorcluster. Diese Signaltöne werden als kurze Pulse via Lautsprecher an den Fahrer des Fahrzeugs ausgegeben. Die Häufigkeit dieser ausgegebenen Signaltonpulse wird verwendet, um den Abstand zu einem Objekt zu kodieren. Dabei wird bei einem großen Abstand ein zeitlich großer Abstand zwischen den ausgegebenen Signalpulsen verwendet, welche im Zuge geringerer Objektabstände ebenfalls verringert werden. Eine Vollwarnung, z.B. in Form eines Dauertons, wird zumeist dann ausgegeben, wenn die Zuverlässigkeit des Systems eine vordefinierte Grenze erreicht hat.

Die EP 1 403 138 A1 beschreibt ein Verfahren und eine Vorrichtung zur Überwachung eines sich bewegenden Objekts, bei dem ein dreidimensionales Bild der Umgebung geschaffen wird und daraus folgend das System entscheidet, ob eine Warnmeldung für das sich bewegende Objekt ausgegeben werden muss. Falls ein erster definierter Minimalabstand zu einem Objekt, welches sich als nächstes zu dem sich bewegenden Objekt befindet, überschritten wird, kommt es hierbei zu einer akustischen Warnung und das virtuelle, dreidimensionale Bild wird aufgezeigt. Mit Hilfe dieses Bildes, sowie einer weiteren Medienskala ist es dem Fahrer des sich bewegenden Objekts nun möglich weiter zu verfahren.

Die DE 10 2008 017 030 A1 offenbart ein Einparkhilfesystem, bei welchem unterschiedliche Warnsysteme als Alternativen vorgeschlagen werden, um sicherheitskritische Abstände zu signalisieren. Optische und akustische Warnungen werden ebenso wie das Aufleuchten oder Erlöschen einer Lampe vorgeschlagen, wobei die Abstandswarnung bei Unterschreiten eines bestimmten Sicherheitsmindestabstandes zu einem Umgebungsobjekt ausgegeben wird.

Die DE 10 2004 010 752 A1 offenbart ein Verfahren zur Abstandswarnung, bei welchem mehrere Schwellen eines Abstandes von einem Umgebungsobjekt in unterschiedlicher Weise signalisiert werden. In einem ersten Abstandsbereich erfolgt keine oder lediglich eine optische Warnung. In einem zweiten, kleineren Abstandsbereich wird die optische Warnung durch eine akustische Warnung ergänzt. Als Umgebungsobjekte werden Fremdfahrzeuge, Blumenkübel, Verkehrszeichen oder Fahrradständer beispielhaft genannt. Zudem werden Messtoleranzen des verwendeten Systems angesprochen, welche beim Unterschreiten des zweiten Abstandswertes dazu führen, dass eine Kollision nicht mit letzter Sicherheit ausgeschlossen werden kann.

Die DE 44 25 419 C1 offenbart eine Ultraschall-Abstandswarnanlage in einem Kraftfahrzeug, insbesondere als Einparkhilfe, bei welcher als Warnanzeigen eine Balkendiagrammanzeige, insbesondere in unterschiedlichen Farben (z.B. gelb/rot), ein Warnton und eine Tonfrequenzänderung Entfernungs- bzw. Richtungsabhängig ausgegeben werden. Warnelemente werden mit integrierter optischer und akustischer Warnfunktion ausgestaltet und zur Anordnung an unterschiedlichen Orten im Fahrzeuginnenraum vorgeschlagen. Eine Lautsprecheraktivierung bei Vorwärtsfahrt erfolgt erst bei einem sehr geringen Hindernisabstand. Für einen heckseitigen Hindernisabstand werden 30 cm zur Ausgabe einer akustischen Warnung vorgeschlagen. Erst ab einem vorgegebenen Mindestabstand von z.B. ca. 20 cm geht die akustische Warnung in einen Dauerton über.

Den bekannten Messsystemen ist gemeinsam, dass lediglich ein Minimalabstand einem Vollausschlag bzw. einer Vollwarnung eines Messsignals zugeordnet ist. Als Vollwarnung wird landläufig der Abstand bezeichnet, ab welchem das Messsystem nicht mehr sicher bestimmen kann, ob eine weitere Bewegung in Richtung des Objektes kollisionsfrei möglich bzw. sinnvoll ist. Handelt es sich bei dem nächstgelegen reflektierenden Objekt beispielsweise um einen zerklüfteten Felsstein, kann die Gefahr einer weiteren Annäherung mittels akustischer Messtechnik allein nicht bestimmt werden, weil nicht sicher festgestellt werden kann, ob der Reflexionspunkt, der durch die Abstandsdetektion bestimmt wurde, tatsächlich der zum Fahrzeug nächstgelegene befindliche Abstand ist. Aufgrund dieses Unwissens und damit verbundenen Restrisikos wird heute die Vollwarnung bei ca. 30 cm ausgegeben. In Einzelfällen sind Umfelddetektionssysteme bekannt, bei welchen erst ab 20 cm die Vollwarnung ausgegeben wird. Weiß jedoch der Fahrer z.B. infolge seiner Beobachtungen während der Annäherung bzw. aus Erfahrung, dass sich vor dem Fahrzeug ein Objekt in einem bislang unkritischen Abstand befindet, könnte der Fahrer eigenverantwortlich dichter an dieses Objekt heranfahren (z.B. an eine senkrecht vor dem Wandler befindliche Säule während eines Lenkmanövers). Es ist daher eine Aufgabe der vorliegenden Erfindung, einen Fahrer beim Manövrieren in einem Abstandsbereich zu unterstützen, der die Übernahme einer erhöhten Eigenverantwortung erfordert.

### Offenbarung der Erfindung

Die vorstehend genannte Aufgabe wird erfindungsgemäß durch ein Verfahren sowie eine Vorrichtung zum Signalisieren eines Abstandssignals gelöst. Dabei wird zunächst ein erster vordefinierter Minimalabstand durch einen Vollausschlag einer ersten Medienskala signalisiert. Der erste vordefinierte Minimalabstand ist beispielsweise ein solcher Abstand, bis zu welchem das Abstandssignal derart sicher ermittelt werden kann, dass eine Kollision mit Sicherheit ausgeschlossen werden kann. Diesem Minimalabstand ist der Vollausschlag einer ersten Medienskala zugeordnet, wobei die Medienskala eine Wiedergabe ermittelter Abstände quantitativ und/oder qualitativ ermöglicht. Im Stand der Technik haben sich als Medienskalen unterschiedliche akustische und/oder optische Signale bewährt, welche sämtlich und/oder in Kombination auch zur Realisierung der vorliegenden Erfindung verwendet werden können. Nach dem Erreichen des ersten vordefinierten Minimalabstandes wird ein unterhalb des ersten Minimalabstandes liegender Abstand von einem Umgebungsobjekt ermittelt. Mit anderen Worten wird das Abstandssignal dahingehend interpretiert, dass das zugrundeliegende Umgebungsobjekt näher an einen zur Ermittlung verwendeten Sensor herangerückt ist. Dabei dringt das Umgebungsobjekt beispielsweise in einen Abstandsbereich ein, in welchem eine Kollision aus technischen und/oder reaktionszeitbedingten Gründen nicht hundertprozentig ausgeschlossen werden kann. Im Ansprechen auf das Erreichen des Abstandes unterhalb des ersten Minimalabstandes wird anschließend mittels einer zweiten Medienskala dieser Abstand dem Anwender signalisiert. Die zweite Medienskala unterscheidet sich von der ersten Medienskala zumindest dahingehend, dass eine zusätzliche Information der bloßen Wiedergabe des Abstandssignals über die erste Medienskala hinzutritt, über welche der Anwender darüber informiert wird, dass er in einem Abstandsbereich manövriert, der eine erhöhte Eigenverantwortung für den Fahrer erfordert. Die erste Medienskala kann während des Verwendens der zweiten Medienskala deaktiviert oder weiter verwendet werden (z.B. durch Anzeigen des Vollausschlages). Auf diese Weise kann die vorliegende Erfindung auch bestehende Abstandsmesssysteme (Umfelddetektionssysteme) dahingehend verbessern, dass die technisch grundsätzlich mögliche Erkennung sehr geringer Abstände für den Anwender nutzbar wird, sofern dieser bereit ist, die Manöver unter Übernahme einer erhöhten Eigenverantwortung durchzuführen.

Die Unteransprüche zeigen bevorzugte Weiterbildungen der Erfindung.

Weiter bevorzugt kann das Abstandssignal einem Abstand eines Fortbewegungsmittels zu einem Umgebungsobjekt zugeordnet sein. Das Fortbewegungsmittel kann beispielsweise ein Pkw sein. Das Umgebungsobjekt kann beispielsweise ein Hindernis in der Fahrzeugumgebung (Fremdfahrzeug, Laternenpfahl, Bordstein o.Ä.) sein. Das Ermitteln der Abstände kann wie in bewährten Systemen durch Auswertung von Ultraschallechos erfolgen. Das Signalisieren der ermittelten Abstände kann akustisch und/oder optisch unter Verwendung einer HMI, eines Kombiinstrumentes und/oder unter Verwendung von Lautsprechern eines Entertainmentsystems erfolgen. Auf diese Weise kann im Wesentlichen auf bereits verwendete Hardware zurückgegriffen werden, so dass die vorliegende Erfindung kostengünstig durch Softwarecode realisiert werden kann.

Ein erstes Beispiel für die Natur der ersten vordefinierten Medienskala ist beispielsweise eine Farbskala. Im Zuge einer Annäherung wird dem Anwender ein hoher Abstand von einem erkannten Umgebungsobjekt grün, ein verringerter Abstand gelb und ein sehr geringer Abstand rot dargestellt. Dabei ist rot auch diejenige Farbe, welche zur Signalisierung einer Vollwarnung verwendet wird. Alternativ oder zusätzlich kann (je nach Beschaffenheit der Anzeigeeinheit) der Abstand grafisch und/oder durch Anzeige von den Restabstand charakterisierender Zahlenwerte, bevorzugt einheitenbehafteter Zahlenwerte, bevorzugt unter Berücksichtigung einer Sicherheitsreserve, angezeigt werden. Dabei kann beispielsweise ein Teil eines Ego-Fahrzeugs dargestellt werden und fächerförmig aufgespannte Sektoren in dessen Umgebung zur Visualisierung ermittelter Abstände zu Umgebungsobjekten verwendet werden. Eine Einblendung von Zahlenwerten, ggf. mit Einheiten, ist optional ebenfalls möglich. Im Stand der Technik bereits bekannte Systeme verwenden mitunter entlang einer Linie angeordnete Beleuchtungseinheiten (z.B. LEDs), welche bei abnehmendem Abstand in zunehmender Anzahl erleuchtet werden. Auch unterschiedliche Farben der Beleuchtungseinheiten sind bekannt, während gelbe Beleuchtungseinheiten für unkritische Abstände und rote Beleuchtungseinheiten für kritische Abstände und Vollausschlag stehen. Ebenfalls ist es bekannt, intermittierende akustische Ausgaben zur Auralisierung eines ermittelten Abstandes zu verwenden. Hierbei wird die Wiederholfrequenz erhöht, wenn sich der Abstand verringert. Als Vollwarnung wird ein Dauerton ausgegeben. Mitunter unterscheiden sich die Tonfrequenzen für Warnungen bezüglich der Fahrzeugfront bzw. des Fahrzeughecks. Die vorgenannten Optionen können einzeln oder in Verbindung miteinander als erste Medienskala verwendet werden, durch welche das Abstandssignal bis zum Erreichen des ersten vordefinierten Minimalabstandes signalisiert wird. Für die zweite Medienskala wird zumindest eine der obigen Optionen zusätzlich zur ersten Medienskala oder anstelle der ersten Medienskala verwendet. Auf diese Weise wird dem Anwender durch das Wechseln der Medienskala signalisiert, dass er die nachfolgenden Signalisierungen unter erhöhter Eigenverantwortung auszuwerten hat.

Der unterhalb des ersten Minimalabstandes liegende Abstand wird erfindungsgemäß einem Bereich einer erhöhten Messunsicherheit zugeordnet. Mit anderen Worten können Echos in diesem Bereich mitunter schwerer erkannt und einem bestimmten Abstand zum reflektierenden Objekt zugeordnet werden. Dies kann beispielsweise dadurch bedingt sein, dass ausschwingende Membranen von Sende-Empfangseinheiten verwendet werden, um eintreffende Echos zu empfangen. Ein Unterscheiden zwischen Ausschwingsignal und empfangenem Echosignal kann daher gewisse Messunsicherheiten bedingen, welche eine erhöhte Eigenverantwortung bei ihrer Interpretation erfordern. Mit anderen Worten ist ein erhöhter Aufmerksamkeitsgrad bei der Interpretation durch den Anwender erforderlich. Anders ausgedrückt erhöht sich der Verifikationsbedarf bei der Auswertung durch den Anwender. Die Verifikation kann der Anwender entweder erfahrungsbasiert vornehmen oder zusätzliche (optische/akustische) Kontrollen vor der Durchführung eines bevorstehenden Manövers vornehmen.

Erfindungsgemäß kann die zweite Medienskala zur Signalisierung mindestens zweier unterschiedlicher Abstände eingerichtet sein. Mit anderen Worten können unterschiedliche Abstände signalisiert werden, obwohl sie sich jenseits der Vollwarnung auf der ersten Medienskala befinden. Auf diese Weise ist auch die zweite Medienskala eingerichtet, den ermittelten Abstand quantitativ zu erfassen bzw. wiederzugeben. Der Anwender wird somit im Gegensatz zum Stand der Technik nicht lediglich darüber informiert, dass ein aktuelles Manöver jenseits der Vollwarnung liegt, sondern im Rahmen der technischen Möglichkeiten auch über die Höhe des ermittelten Abstandes informiert.

Der erste Minimalabstand kann beispielsweise in einem Bereich zwischen 15 cm und 40 cm, insbesondere zwischen 15 cm und 35 cm bzw. zwischen 20 cm und 30 cm liegen. Insbesondere der Bereich zwischen 20 cm und 30 cm liegt im Rahmen dessen, was gemäß dem Stand der Technik mit einer Vollwarnung quittiert wird.

Zur Erhöhung der Aussagekraft eines signalisierten Abstandes kann bei Überschreiten des Minimalabstandes ein optischer Zoom auf einen Bereich des geringsten Abstandes in einer optischen Anzeige einer zweiten Medienskala durchgeführt werden. Mit anderen Worten wird eine optische Vergrößerung desjenigen Bereiches vorgenommen, in welchem sich der fahrsicherheitstechnisch kritische Abstand befindet. Insbesondere kann beim Überschreiten der Vollwarnung auf der ersten Medienskala der Zoom durchgeführt werden, durch welchen der Anwender eine zusätzliche Information über das Erfordernis einer erhöhten Eigenverantwortung erhält.

Gemäß einem zweiten Aspekt der vorliegenden Erfindung wird eine Vorrichtung zum Signalisieren eines Abstandssignals mit einem Signalwandler zum Ermitteln des Abstandssignals, einer Auswerteeinheit sowie einer Signalisierungseinheit vorgeschlagen. Der Signalwandler kann beispielsweise als Ultraschallwandler ausgeführt sein. Insbesondere kann er als Ultraschallsendeempfänger ausgestaltet sein. Die Auswerteeinheit kann einen Prozessor (z.B. einen Mikrocontroller und/oder einen Nanocontroller) umfassen, um die Schritte zu steuern, wie sie in Verbindung mit dem erstgenannten Erfindungsaspekt im Detail beschrieben worden sind. Die Signalisierungseinheit kann beispielsweise Komponenten eines Infotainmentsystems umfassen und/oder Einheiten eines Kombiinstrumentes einbeziehen. Eine klassische Ausführungsform einer Signalisierungseinheit ist auch eine HMI, auf welcher komplexe Darstellungen zur hochauflösenden Signalisierung von Abstandssignalen möglich sind. Durch die vorgenannten Komponenten ist die erfindungsgemäße Vorrichtung eingerichtet, ein Verfahren auszuführen, wie es oben im Detail beschrieben worden ist.

Die Merkmale, Merkmalskombinationen sowie die sich aus diesen ergebenden Vorteile entsprechen den in Verbindung mit dem erstgenannten Erfindungsaspekt beschriebenen derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht einer Anzeige gemäß einem Ausführungsbeispiel einer erfindungsgemäßen Vorrichtung;
- Figur 2: ein Flussdiagramm veranschaulichend Schritte eines Ausführungsbeispiels eines erfindungsgemäßen Verfahrens; und
- Figur 3: eine schematische Ansicht über Komponenten eines Ausführungsbeispiels einer erfindungsgemäßen Vorrichtung.

### Ausführungsformen der Erfindung

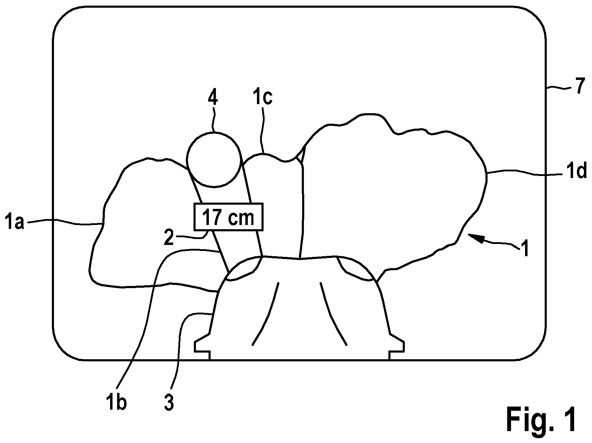

Figur 1 zeigt eine Anzeige 7 als Signalisierungseinheit, auf welcher die Front eines Ego-Fahrzeugs 3 sowie ein Umgebungsobjekt 4 dargestellt sind. Über das Abstandssystem ermittelte Abstände zu Umgebungsobjekten werden über im Wesentlichen sektorförmig ausgestaltete Bereiche 1a, 1b, 1c, 1d einer ersten Medienskala 1 visualisiert. Zwei unkritische Bereiche 1a, 1d können dabei beispielsweise grün eingefärbt werden. Ein zweiter Bereich 1c steht für einen kürzeren, aber immer noch unkritischen Abstand zu einem Umgebungsobjekt (nicht dargestellt), welcher beispielsweise gelb eingefärbt werden könnte. Ein dritter Bereich 1b steht für den kollisionskritischen Abstand, der in Anbetracht einer aktuell gefahrenen Trajektorie beispielsweise als erstes zu einem Kontakt zwischen dem Umgebungsobjekt 4 und dem Ego-Fahrzeug 3 führen würde. Nach dem Unterschreiten eines ersten vordefinierten Minimalabstandes von 20 cm wurde eine zweite Medienskala in Form eines Textfeldes 2 der Anzeige des dritten Bereiches 1b überlagert, um den Anwender über die Tatsache zu informieren, dass eine weitere Annäherung an das Umgebungsobjekt 4 nur unter Übernahme einer erhöhten Eigenverantwortung vorgenommen werden kann. Das Textfeld 2 kann beispielsweise rot hinterlegt, rot blinkend, abwechselnd in unterschiedlichen Farben blinkend oder um ein Ausrufezeichen ergänzt dargestellt werden.

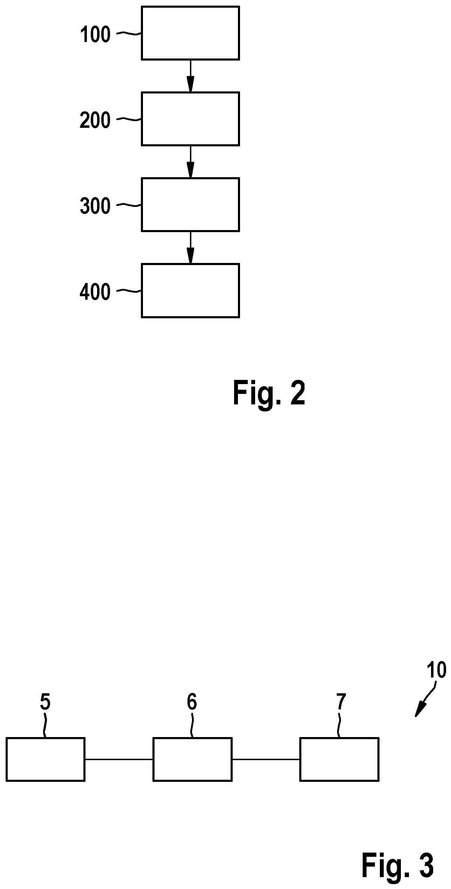

Figur 2 zeigt ein Flussdiagramm veranschaulichend Schritte eines Ausführungsbeispiels eines erfindungsgemäßen Verfahrens. In Schritt 100 wird ein erster vordefinierter Minimalabstand erkannt, welcher eine Untergrenze für durch das System sicher ermittelbare Abstände darstellt. Anschließend wird in Schritt 200 der erste vordefinierte Minimalabstand durch einen Vollausschlag einer ersten Medienskala signalisiert. In Schritt 300 verringert sich der Abstand auf einen unterhalb des ersten Minimalabstandes liegenden Abstand, was ebenfalls systemtechnisch erkannt wird. Im Ansprechen darauf wird in Schritt 400 mittels einer zweiten Medienskala der Abstand visualisiert, so dass der Anwender bei der Einschätzung des Abstandes unterstützt wird, während der Hersteller des Systems nicht für die Verlässlichkeit der Signalisierung haftet.

Figur 3 zeigt eine schematische Ansicht eines Ausführungsbeispiels einer erfindungsgemäßen Vorrichtung 10. Diese umfasst einen Ultraschallsendeempfänger 5 als Signalwandler, einen Prozessor 6 als Auswerteeinheit und eine Anzeige 7 als Signalisierungseinheit. Dabei ist der Prozessor 6 eingerichtet, im Ansprechen auf jeweilige vom Ultraschallsendeempfänger 5 erhaltene Abstandssignale eine erfindungsgemäße Signalisierung über unterschiedliche Medienskalen 1, 2 vorzunehmen, welche über die Anzeige 7 ausgegeben werden.

Die vorstehenden Ausführungsbeispiele zur Realisierung der vorliegenden Erfindung stellen lediglich eine Auswahl aus einer Menge zahlloser Realisierungsmöglichkeiten dar, welche sich für die vorliegende Erfindung ergeben. Zusätzlich zu den genannten Maßnahmen können auch extrem breitbandige kurze Impulse ("Knack"-Laute) mit zunehmender Annäherung in immer kürzeren Abständen zueinander wiedergegeben werden, so dass bei Erreichen der geringsten Nahmessgrenze ein niederfrequentes Dauerknacken ausgegeben wird. Zusätzlich kann bei Verwendung einer grafischen Darstellung der entsprechende Stoßfängerbereich des Fahrzeugs farbig blinkend in dem kollisionsrelevanten Bereich dargestellt werden, wobei die Blinkfrequenz in Abhängigkeit des Abstandes reziprok erhöht wird. Diese Blinkfrequenz kann als Flackern (z.B. ≥ 16 Hz) visualisiert werden. Zusätzlich können weitere Farben (z.B. magenta und/oder dunkelrot und/oder schwarz) zur Kennzeichnung des besonders kritischen Bereiches mittels eines Symbols, einer Zahl und/oder eines Flächenbereichs verwendet werden. Auch hier können Blinkeffekte zusätzlich verwendet werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zum Signalisieren eines Abstandssignals umfassend die Schritte:
- Signalisieren (200) eines ersten vordefinierten Minimalabstandes durch einen Vollausschlag einer ersten Medienskala (1),
- Ermitteln (300) eines unterhalb des ersten Minimalabstandes liegenden Abstandes und im Ansprechen darauf
- Signalisieren (400) des unterhalb des ersten Minimalabstandes liegenden Abstandes mittels einer zweiten Medienskala (2)
**dadurch gekennzeichnet, dass**
- der unterhalb des ersten Minimalabstandes liegende Abstand einem Bereich höherer Messunsicherheit zugeordnet ist.

2. Verfahren nach Anspruch 1, wobei das Abstandssignal einem Abstand eines Fortbewegungsmittels (3) zu einem Umgebungsobjekt (4) zugeordnet ist.

3. Verfahren nach Anspruch 1 oder 2, wobei die erste vordefinierte Medienskala (1) zumindest einen aus der Gruppe
- eine Farbskala, und
- eine Visualisierung eines Abstandes, insbesondere graphisch und/oder in einheitenbehafteten Zahlenwerten, und
- eine Vielzahl hintereinander angeordneter separater Beleuchtungseinheiten, und
- eine in Abhängigkeit eines ermittelten Abstandes intermittierende akustische Ausgabe einer ersten oder zweiten Tonfrequenz, ausgewählten Einträge umfasst, und wobei
- die zweite Medienskala (2) zumindest einen der obigen Einträge, welcher nicht in der ersten Medienskala (1) umfasst ist, umfasst.

4. Verfahren nach einem der vorstehenden Ansprüche, wobei der unterhalb des ersten Minimalabstandes liegende Abstand einem höheren Verifikationsbedarf durch einen Anwender zugeordnet ist.

5. Verfahren nach einem der vorstehenden Ansprüche, wobei die zweite Medienskala (2) zur Signalisierung mindestens zweier unterschiedlicher unterhalb des ersten Minimalabstandes liegender Abstände eingerichtet ist.

6. Verfahren nach einem der vorstehenden Ansprüche, wobei der erste Minimalabstand in einem Bereich zwischen 15 cm und 40 cm, insbesondere zwischen 15 cm und 35 cm, bevorzugt zwischen 20 cm und 30 cm, liegt.

7. Verfahren nach einem der vorstehenden Ansprüche, wobei die Signalisierung des Abstandssignals bei Überschreiten des Minimalabstandes im Bereich des geringsten Abstandes optisch vergrößert dargestellt wird.

8. Vorrichtung zum Signalisieren eines Abstandssignals umfassend:
- einen Signalwandler (5) zum Ermitteln des Abstandssignals,
- eine Auswerteeinheit (6), und
- eine Signalisierungseinheit (7),
- wobei die Vorrichtung (10) eingerichtet ist, ein Verfahren gemäß einem der vorstehenden Ansprüche durchzuführen.

## Claims

1. Method for signalling a distance signal, comprising the steps of:
- signalling (200) a first predefined minimum distance by way of a full scale of a first media scale (1),
- ascertaining (300) a distance that falls below the first minimum distance and, as a reaction thereto,
- signalling (400) the distance that falls below the first minimum distance by way of a second media scale (2),
**characterized in that**
- the distance that falls below the first minimum distance is associated with a range of greater measurement uncertainty.

2. Method according to Claim 1, wherein the distance signal is associated with a distance of a transport means (3) from an environment object (4).

3. Method according to Claim 1 or 2, wherein the first predefined media scale (1) comprises at least one item selected from the group consisting of
- a colour scale, and
- a visualization of a distance, in particular graphically and/or in unit-related number values, and
- a multiplicity of separate illumination units arranged one behind the other, and
- an acoustic output, which is intermittent in dependence on an ascertained distance, of a first or second tone frequency, and wherein
- the second media scale (2) comprises at least one of the above items that is not one the first medium scale (1) comprises.

4. Method according to one of the preceding claims, wherein the distance that falls below the first minimum distance is associated with a greater verification requirement by a user.

5. Method according to one of the preceding claims, wherein the second media scale (2) is set up for signalling at least two different distances that fall below the first minimum distance.

6. Method according to one of the preceding claims, wherein the first minimum distance lies in a range between 15 cm and 40 cm, in particular between 15 cm and 35 cm, preferably between 20 cm and 30 cm.

7. Method according to one of the preceding claims, wherein, upon exceeding of the minimum distance, the signalling of the distance signal is presented in optically magnified fashion in the region of the lowest distance.

8. Apparatus for signalling a distance signal, comprising:
- a signal converter (5) for ascertaining the distance signal,
- an evaluation unit (6), and
- a signalling unit (7),
- wherein the apparatus (10) is set up to perform a method according to one of the preceding claims.

## Revendications

1. Procédé de signalisation d'un signal de distance, comprenant les étapes suivantes :
- signalisation (200) d'une première distance minimale prédéfinie par une déviation totale d'une première échelle multimédia (1),
- détermination (300) d'une distance se situant en-dessous de la première distance minimale et, en réponse à celle-ci,
- signalisation (400) de la distance se situant en-dessous de la première distance minimale au moyen d'une seconde échelle multimédia (2),
**caractérisé en ce que** la distance se situant en-dessous de la première distance minimale est associée à une plage d'incertitude de mesure plus élevée.

2. Procédé selon la revendication 1, dans lequel le signal de distance est associé à une distance entre un moyen de locomotion (3) et un objet environnant (4).

3. Procédé selon la revendication 1 ou 2, dans lequel la première échelle multimédia prédéfinie (1) comprend au moins l'un des éléments du groupe comprenant :
- une échelle de couleurs, et
- une visualisation d'une distance, en particulier graphiquement et/ou par valeurs numériques liées à des unités, et
- une pluralité d'unités d'éclairage séparées, disposées les unes derrière les autres, et
- une sortie acoustique intermittente à une première ou à une seconde fréquence de tonalité, d'entrées sélectionnées, en fonction d'une distance déterminée, et dans lequel
- la seconde échelle multimédia (2) comprend au moins l'une des entrées susmentionnées qui n'est pas incluse dans la première échelle multimédia (1).

4. Procédé selon l'une des revendications précédentes, dans lequel la distance se situant en-dessous de la première distance minimale est associée à une nécessité de vérification plus élevée par un utilisateur.

5. Procédé selon l'une des revendications précédentes, dans lequel la seconde échelle multimédia (2) est conçue pour la signalisation d'au moins deux distances différentes et inférieures à la première distance minimale.

6. Procédé selon l'une des revendications précédentes, dans lequel la première distance minimale se situe dans une plage comprise entre 15 cm et 40 cm, en particulier entre 15 cm et 35 cm, de préférence entre 20 cm et 30 cm.

7. Procédé selon l'une des revendications précédentes, dans lequel la signalisation du signal de distance est grossie optiquement dans la plage de la distance la plus petite lorsque la distance minimale est dépassée.

8. Dispositif de signalisation d'un signal de distance, comprenant :
- un convertisseur de signal (5) pour détecter le signal de distance,
- une unité d'évaluation (6), et
- une unité de signalisation (7),
- dans lequel le dispositif (10) est conçu pour mettre en œuvre un procédé selon l'une des revendications précédentes.
